# EUROPEAN PATENT APPLICATION

(11) **EP 4 852 424 A1**
(43) Date of publication of application: **09.12.2026**
(21) Application number: 25315200.3
(22) Date of filing: 06.06.2025
(51) Int. Cl.: H04N 19/117, H04N 19/176, H04N 19/186, H04N 19/52, H04N 19/82

(54) **METHOD AND APPARATUS FOR INTER CROSS-COMPONENT PREDICTING CHROMA SAMPLES OF A BLOCK OF THE PICTURE**

(71) Applicant: Beijing Xiaomi Mobile Software Co., Ltd., Beijing Beijing 100085 (CN)
(72) Inventor: Ghaznavi Youvalari, Ramin, Beijing, 100085 (CN); Abdoli, Mohsen, Beijing, 100085 (CN); Tissier, Alexandre, Beijing, 100085 (CN); Plowman, Frank, Beijing, 100085 (CN)
(74) Representative: Zimmermann, Tankred Klaus

(57) **Abstract**

A method of predicting chroma samples of one or more blocks of a picture is described. The method includes inter cross-component predicting chroma samples of a block using fractional-pel precision, wherein
- one or more cross-component filters are obtained using: (1) one or more integer-pel motion compensated luma samples of the block and one or more integer-pel motion compensated chroma samples of the block, which are obtained from a fractional-pel vector for an inter prediction of the block, or (2) one or more or all of a plurality of luma samples to be blended for cross-component predicting one or more chroma samples, and/or one or more or all of a plurality of chroma samples to be blended for obtaining one or more final predicted chroma samples, wherein the luma and chroma samples comprise fractional-pel motion compensated luma and chroma samples, and/or integer-pel motion compensated luma and chroma samples, which are obtained from a fractional-pel vector for an inter prediction of the block, and/or
- one or more one or more cross-component predicted chroma samples are obtained using one or more non-reconstructed luma samples, wherein the one or more non-reconstructed luma samples comprise one or more fractional-pel motion compensated luma samples of the block or one or more integer-pel motion compensated luma samples of the block, which are obtained from a fractional-pel vector for an inter prediction of the block.

## Description

### Technical Field

The present disclosure generally relates to the field of encoding/decoding pictures, images or videos, and embodiments of the present disclosure concern improvements of inter cross-component prediction tools. More specific embodiments of the present disclosure relate to a latency reduction inter cross-component prediction tools, e.g., for an inter cross-component predicting chroma samples of a block of a picture, like an inter convolutional cross-component model (interCCCM) process, a cross-component linear model (CCLM) process, or a gradient linear model (GLM) process.

### Background

The encoding and decoding of a picture, an image or a video is performed in accordance with a certain standard, for example, in accordance with the ISO/IEC 14496-10 Advanced Video Coding, AVC, standard (see reference [1]), the ISO/IEC 23094-1 Essential video coding, EVC, standard, the ISO/IEC 23008-2 High Efficiency Video Coding, HEVC, standard (see reference [2]), the ISO/IEC 23090-3 Versatile Video Coding, VVC, standard (see reference [3]) or the AOMedia Video 1, AV1, standard.

For encoding and decoding a picture, state-of-the inter cross-component prediction tools require several sequential processes which introduce latency into a coding pipeline.

Thus, there is a need to provide further improvements for inter cross-component predicting chroma samples of a block of a picture, an image or a video.

### Summary

The present invention provides a method of predicting chroma samples of one or more blocks of a picture, the method comprising:
inter cross-component predicting chroma samples of a block using fractional-pel precision,
wherein one or more cross-component filters are obtained using:
   - one or more integer-pel motion compensated luma samples of the block and one or more integer-pel motion compensated chroma samples of the block, which are obtained from a fractional-pel vector for an inter prediction of the block, or
   - one or more or all of a plurality of luma samples to be blended for cross-component predicting one or more chroma samples, and/or one or more or all of a plurality of chroma samples to be blended for obtaining one or more final predicted chroma samples, wherein the luma and chroma samples comprise fractional-pel motion compensated luma and chroma samples, and/or integer-pel motion compensated luma and chroma samples, which are obtained from a fractional-pel vector for an inter prediction of the block, and/or
wherein one or more cross-component predicted chroma samples are obtained using one or more non-reconstructed luma samples, wherein the one or more non-reconstructed luma samples comprise one or more fractional-pel motion compensated luma samples of the block or one or more integer-pel motion compensated luma samples of the block, which are obtained from a fractional-pel vector for an inter prediction of the block.

In accordance with embodiments, the integer-pel motion compensated luma and chroma samples are used only for obtaining the one or more cross-component filters, and wherein fractional-pel motion compensated luma samples are used for the cross-component predicting, and fractional-pel motion compensated chroma samples are used for the obtaining of the one or more final predicted chroma samples.

In accordance with embodiments, the integer-pel motion compensated luma and chroma samples are obtained using a primary vector for inter prediction, which is in fractional-pel precision, a secondary vector, which is a rounded or integer-pel variant of the primary vector, and wherein the secondary vector is used for identifying the integer-pel motion compensated luma and chroma samples.

In accordance with embodiments,
- the luma and/or chroma samples to be blended are obtained using a multi-prediction process, like a bi-prediction process, and comprise the fractional-pel motion compensated luma and chroma samples and the integer-pel motion compensated luma and chroma samples,
- a plurality or all of the integer-pel motion compensated luma samples are blended into a blended integer-pel motion compensated luma samples,
- a plurality or all of the integer-pel motion compensated chroma samples of the block are blended into a blended integer-pel motion compensated chroma samples, and
- the one or more cross-component filters are obtained using the blended integer-pel motion compensated luma and chroma samples.

In accordance with embodiments,
- a plurality or all of the fractional-pel motion compensated luma samples are blended into a blended fractional-pel motion compensated luma samples,
- a plurality or all of the fractional-pel motion compensated chroma samples of the block are blended into a blended fractional-pel motion compensated chroma samples, and
- the cross-component predicted chroma samples and the one or more final predicted chroma samples are obtained using the blended fractional-pel motion compensated luma and chroma samples.

In accordance with embodiments,
- the luma and/or chroma samples to be blended are obtained using a multi-prediction process, like a bi-prediction process,
- before blending, one or more or all of the luma and chroma samples are used for obtaining the one or more cross-component filters, and
- the blended luma and chroma samples are used for the cross-component predicting and for the obtaining of the one or more final predicted chroma samples.

In accordance with embodiments, the multi-prediction process provides a plurality of uni-prediction luma blocks and a plurality of uni-prediction chroma blocks from respective reference frames which are used for obtaining the one or more cross-component filters.

In accordance with embodiments, only one of the plurality of uni-prediction luma blocks and a corresponding uni-prediction chroma block are used for obtaining the one or more cross-component filters, and wherein the one uni-prediction luma block is selected using a rate-distortion process, e.g., a best performing uni-prediction luma block according to a rate-distortion optimization.

In accordance with embodiments, the one uni-prediction luma block is signaled in the data stream, like a bitstream, e.g., using a flag or an index.

In accordance with embodiments,
only one of the plurality of uni-prediction luma blocks and a corresponding uni-prediction chroma block are used for obtaining the one or more cross-component filters, and the one uni-prediction luma block is selected using one or more of the following criteria associated with a temporal correlation of reference frames, an encoding quality of the reference frames, or a prediction efficiency:
- a temporal distance of reference frames associated with each uni-prediction luma block,
- one or more quality or quantization parameters (QPs) of the reference frames associated with each uni-prediction luma block,
- template cost, or
the one uni-prediction luma block is a fixed or predetermined uni-prediction luma block.

In accordance with embodiments,
the method comprises: reconstructing luma samples of the block using the fractional-pel or integer-pel motion compensated luma samples and luma residuals, and reconstructing chroma samples of the block using the final predicted chroma samples and chroma residuals, and
prior to reconstructing the luma samples, the fractional-pel or integer-pel motion compensated luma samples are applied to a cross-component predicting process.

In accordance with embodiments, the one or more blocks comprise
one or more inter-coded blocks, and the one or more vectors comprise one or more motion vectors, or
one or more non-inter-coded blocks, and the one or more vectors comprise one or more block vectors, e.g., one or more Intra block copy, IBC, coded blocks or one or more intra template matching prediction, intraTMP, coded blocks.

In accordance with embodiments, inter cross-component predicting comprises one of the following:
- an inter convolutional cross-component model (interCCCM) process,
- a cross-component linear model (CCLM) process,
- a gradient linear model (GLM) process.

The present invention provides a non-transitory computer-readable storage medium comprising instructions which, when executed by a computer, cause the computer to carry out the inventive method.

The present invention provides an apparatus for predicting chroma samples of one or more blocks of a picture, the apparatus comprising:
a processing module configured to inter cross-component predict chroma samples of a block using fractional-pel precision,
wherein the processing module is configured to obtain one or more cross-component filters using:
   - one or more integer-pel motion compensated luma samples of the block and one or more integer-pel motion compensated chroma samples of the block, which are obtained from a fractional-pel vector for an inter prediction of the block, or
   - one or more or all of a plurality of luma samples to be blended for cross-component predicting one or more chroma samples, and/or one or more or all of a plurality of chroma samples to be blended for obtaining one or more final predicted chroma samples, wherein the luma and chroma samples comprise fractional-pel motion compensated luma and chroma samples, and/or integer-pel motion compensated luma and chroma samples, which are obtained from a fractional-pel vector for an inter prediction of the block, and/or
wherein the processing module is configured to obtain one or more cross-component predicted chroma samples using one or more non-reconstructed luma samples, wherein the one or more non-reconstructed luma samples comprise one or more fractional-pel motion compensated luma samples of the block or one or more integer-pel motion compensated luma samples of the block, which are obtained from a fractional-pel vector for an inter prediction of the block.

The technical solutions provided according to embodiments of the present disclosure have the following beneficial effects.

A state-of-the-art process for inter cross-component predicting chroma samples requires a preprocessing of the input prediction samples which introduces latency in the processing.

Embodiments of the present disclosure address the above shortcomings in the prior art by providing approaches reducing or avoiding an introduction of the latencies experienced in prior art approaches.

The present disclosure is advantageous because, other than in conventional approaches, the present disclosure makes the inter cross-component prediction more suitable for parallel processing, thereby reducing or avoiding latencies.

It is to be understood that the content described in this section is not intended to identify key or critical features of the embodiment of the present disclosure, nor is it intended to limit the scope of the present disclosure. Other features of the present disclosure become readily apparent from the following description.

### Brief Description of the Drawings

The drawings are explanatory and serve to explain the present disclosure, and are not to be construed to limit the present disclosure to the illustrated embodiments.
- Fig. 1: is a block diagram of a conventional video encoder,
- Fig. 2: is a block diagram of a conventional video decoder,
- Fig. 3: illustrates a spatial part of a convolutional filter,
- Fig. 4: illustrates a reference area of 2 or 6 lines of chroma samples above and left of a prediction unit (PU),
- Fig. 5: illustrates four Sobel based gradient patterns for GLM,
- Fig. 6: illustrates a decoder side of a conventional inter convolutional cross-component model (interCCCM) process,
- Fig. 7: illustrates luma samples in relation to a chroma sample C for use in the interCCCM process of Fig. 6,
- Fig. 8: illustrates a block diagram of a conventional inter convolutional cross-component model (interCCCM) process,
- Fig. 9: illustrates a flow diagram of a method of inter cross-component predicting chroma samples of one or more blocks of a picture in accordance with embodiments of a first aspect of the present disclosure,
- Fig. 10: illustrates a flow diagram of a method of inter cross-component predicting chroma samples of one or more blocks of a picture in accordance with embodiments of a second aspect of the present disclosure,
- Fig. 11: illustrates a flow diagram of a method of inter cross-component predicting chroma samples of one or more blocks of a picture in accordance with embodiments of a third aspect of the present disclosure,
- Fig. 12: illustrates an example of using two sets of MVs when a primary MV is in fractional-pel precision,
- Fig. 13: illustrates a block diagram of an inter convolutional cross-component model (interCCCM) process in accordance with embodiments of the first aspect of the present disclosure,
- Fig. 14: illustrates a block diagram of an inter convolutional cross-component model (interCCCM) process in accordance with embodiments of the second aspect of the present disclosure,
- Fig. 15: illustrates a block diagram of an inter convolutional cross-component model (interCCCM) process in accordance with embodiments of the third aspect of the present disclosure,
- Fig. 16: illustrates a block diagram of an inter convolutional cross-component model (interCCCM) process implementing the first and third aspect of the present disclosure,
- Fig. 17: illustrates a flow diagram of a method for decoding an encoded data stream in accordance with embodiments of the present disclosure,
- Fig. 18: illustrates a flow diagram of a method for encoding a picture into an encoded data stream in accordance with embodiments of the present disclosure,
- Fig. 19: illustrates a block diagram of an apparatus of processing one or more blocks of a picture in accordance with embodiments of the present disclosure,
- Fig. 20: illustrates a block diagram of a decoder for decoding an encoded data stream in accordance with embodiments of the present disclosure,
- Fig. 21: illustrates a block diagram of an encoder for encoding a picture into an encoded data stream in accordance with embodiments of the present disclosure,
- Fig. 22: illustrates a data stream in accordance with embodiments of the present disclosure, and
- Fig. 23: illustrates a block diagram illustrating an electronic device according to embodiments of the present disclosure.

### Detailed Description

Illustrative embodiments of the present disclosure are described below with reference to the drawings, where various details of the embodiments of the present disclosure are included to facilitate understanding and are to be considered as illustrative only. Accordingly, those of ordinary skill in the art recognize that various changes and modifications of the embodiments described herein may be made without departing from the scope of the present disclosure. Also, descriptions of well-known functions and constructions are omitted from the following description for clarity and conciseness.

In the present disclosure, the term "and/or" is intended to cover all possible combinations and sub-combinations of the listed elements, including any one of the listed elements alone, any sub-combination, or all of the elements, and without necessarily excluding additional elements.

In the present disclosure, the phrase "at least one of...or..." is intended to cover any one or more of the listed elements, including any one of the listed elements alone, any sub-combination, or all of the elements, without necessarily excluding any additional elements, and without necessarily requiring all of the elements.

In the present disclosure, the term "coding" refers to "encoding" or to "decoding" as becomes apparent from the context of the described embodiments. Likewise, the term "coder" refers to "an encoder" or to "a decoder".

In the present disclosure, the terms "if", "when", "in case", "responsive to" may be used interchangeably.

### Standard Video Coder

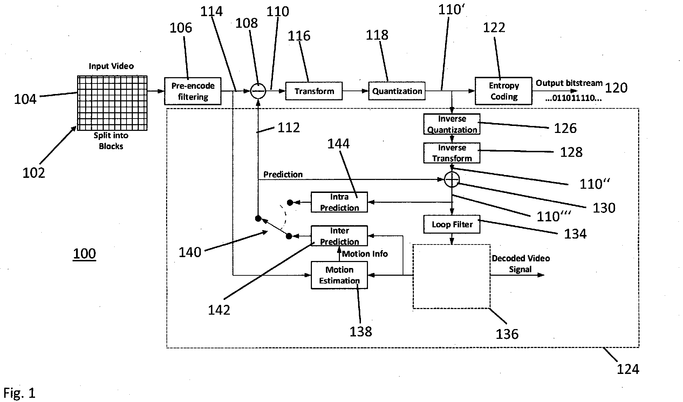

A block diagram of a standard video compression system 100 operating in accordance with the VVC standard is illustrated in Fig. 1. The standard video coder 100 compresses and encodes a picture 102 of a video sequence. The picture 102 to be encoded is partitioned into blocks 104 also referred to as coding units, CUs. The encoder 100 comprises a pre-encode filter 106 and a prediction residual signal former 108 which generates a prediction residual signal 110 so as to measure a deviation of a prediction signal 112 from the signal 114 output by the filter 106. The encoder further comprises a transformer 116, a quantizer 118 and provides an output bitstream or data stream 120 using an entropy coder 122. Further, the encoder 100 comprises a prediction stage 124 for determining the prediction signal 112, which includes a de-quantizer or inverse quantizer 126, an inverse transformer 128, a combiner 130, an in-loop filter 134, a picture buffer 136, a motion estimator 138, an intra/inter mode selector 140, an inter predictor 142 and an intra predictor 144.

The video coder 100 as described with reference to Fig. 1 compresses and encodes a picture 102 of a video sequence as follows. The picture 102 to be encoded is partitioned into the blocks or CUs 104. Each coding unit 104 is encoded using either an intra or inter coding mode. When a CU is encoded in the intra mode, intra prediction is performed by the intra predictor 144. The intra prediction comprises predicting the current CU 114 being encoded by means of already coded, decoded and reconstructed picture samples located around the current CU, e.g., on the top and on the left of the current CU. The intra prediction is performed in the spatial domain. In an inter mode, motion compensation and motion estimation are performed by the motion estimator 138 which searches, in one or more reference pictures provided by the picture buffer 136 and used to predictively code the current picture, a CU that is a good predictor of a current CU. For example, a good predictor of a current CU is a predictor which is similar to the current CU, i.e., the distortion between the two CUs is low or below a certain threshold. The motion estimation may also account for the rate cost of signaling the predictor to optimize a rate-distortion tradeoff. The output of the motion estimation step is one or more motion vectors and reference indices associated with the current CU. The motion compensation then predicts the current CU by means of the one or more motion vectors and reference pictures indices as determined by the motion estimator 138. Basically, the block or CU contained in the selected reference picture and pointed to by the determined motion vector is used as the prediction block for the current CU. The encoder 100, by means of the selector 140, selects one of the intra coding mode or the inter coding mode to use for encoding the CU and indicates the intra/inter decision, for example, by means of a prediction mode flag. Prediction residuals are calculated or determined, for example, by subtracting the predicted block from the original image block. Prediction residuals 110 are then transformed and quantized by blocks 116 and 118, and the quantized transform coefficients as well as the motion vectors and other syntax elements are entropy encoded and written into the output bitstream 120. The encoder 100 may skip the transform stage 116 and apply the quantization directly to the non-transformed residual signal 110 in a so-called transform-skip coding mode. After a block or CU has been encoded, the encoder decodes the CU and reconstructs it so as to obtain the reconstructed signal 110‴ that may serve as a reference data for predicting future CUs or blocks to encode. The quantized transform coefficients 110' are de-quantized and inverse transformed leading to a decoded prediction CU or block 110", and the decoded prediction residuals and the predicted block are then combined at 130, typically summed, so as to provide the reconstructed block or CU 110"'. The in-loop filters 134 are applied to the reconstructed picture to reduce compensation artifacts. For example, a deblocking filter, a sample adaptive offset, SAO, filter, and an adaptive loop filter, ALF, may be applied to reduce encoding artifacts. The filtered picture is stored in the buffer 136, also referred to as the decoded picture buffer, DPB, so that it may be used as a reference picture for coding subsequent pictures.

### Standard Video Decoder

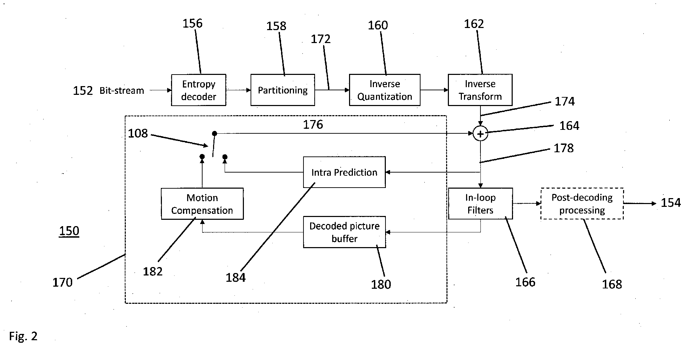

Fig. 2 is a block diagram of a video decoder 150 for predictively decoding from a data or bitstream 152 a picture or video which is provided at an output 154 of the decoder 150. The decoder 150 includes an entropy decoder 156, a partitioning block 158, an inverse quantizer 160, an inverse transformer 162, a combiner 164, an in-loop filter 166, optionally a post-decoding processor 168, and a prediction module 170. The prediction module 170 includes a decoded picture buffer 180 a motion compensator 182 an intra predictor 184.

An encoded picture of a video sequence is decompressed and decoded by the decoder 150 as follows. The input bitstream 152 is entropy decoded by the decoder 156 which provides, for example, the block partitioning information, the coding mode for each coding unit, the transform coefficients contained in each transform block, prediction information, like intra prediction mode, motion vectors, reference picture indices, and other coding information. The block partitioning information indicates how the picture is partitioned and the decoder 150 may divide the input picture into coding tree units, CTUs, typically of a size of 64x64 or 128x128 pixels and divide each CTU into rectangular or square coding units, CUs, according to the decoded partitioning information. The entropy decoded quantized coefficients 172 are de-quantized 160 and inverse transformed 162 so as to obtain the decoded residual picture or CU 174. The decoded prediction parameters are used to predict the current block or CU, i.e., whether the predicted block is to be obtained through its intra prediction or through its motion-compensated temporal prediction. The prediction process performed at the decoder side is the same as the one performed at the encoder side. The decoded residual blocks 174 are added to the predicted block 176, thereby yielding the reconstructed current image block 178. The in-loop filters 166 are applied to the reconstructed picture or image which is also stored in the decoded picture buffer 180 to serve with the reference picture for future pictures to decode. As mentioned above, the decoded picture may further go through a post-decoding processing, for example for performing an inverse color transformation, for example a conversion from YCbCr 4:2:0 to RGB 4:4:4.

In all above processes, the entropy (de)coding of syntax elements representing encoder decisions such as block partitioning information, prediction modes/parameters, quantized transform coefficients, etc. may be carried out by using a context-adaptive entropy coder, such as Context-Adaptive Binary Arithmetic Coding (CABAC). To use CABAC, each syntax element is first binarized to be represented with a series of bins. Then each bin is associated with a CABAC context model that keeps track of binary values of that particular bin in the past, in order to more efficiently model its probability distribution.

### Description of tools in VVC and Enhanced Compression Model (ECM)

In the following a brief description of certain ECM and VVC/VTM tools, which are described in more detail in the JVET-AG2025 and JVET-T2002 documents.

### Multi-model Linear Model (MMLM)

The cross-component linear model (CCLM) mode or process included in VVC was extended by adding three Multi-model Linear Model (MMLM) modes (JVET-D0110). In each MMLM mode, the reconstructed neighboring samples are classified into two classes using a threshold which is the average of the luma reconstructed neighboring samples. The linear model of each class is derived using the Least-Mean-Square (LMS) method. For the CCLM mode, the LMS method is also used to derive the linear model (LM). A slope adjustment to is applied to the cross-component linear model (CCLM) and to the Multi-model LM prediction. The adjustment is tilting the linear function which maps luma values to chroma values with respect to a center point determined by the average luma value of the reference samples.

### Convolutional cross-component intra prediction model

In this method a convolutional cross-component model (CCCM) is applied to predict chroma samples from reconstructed luma samples in a similar way as is done by current CCLM modes. As with CCLM, the reconstructed luma samples are down-sampled to match the lower resolution chroma grid when chroma sub-sampling is used. Similar to CCLM top, left or top and left reference samples are used as templates for model derivation.

Also, similarly to CCLM, there is an option of using a single model or a multi-model variant of CCCM. The multi-model variant uses two models; one model derived for samples above the average luma reference value and another model for the rest of the samples (following the spirit of the CCLM design). The multi-model CCCM mode may be selected for prediction units (PUs) which have at least 128 reference samples available.

### Convolutional filter

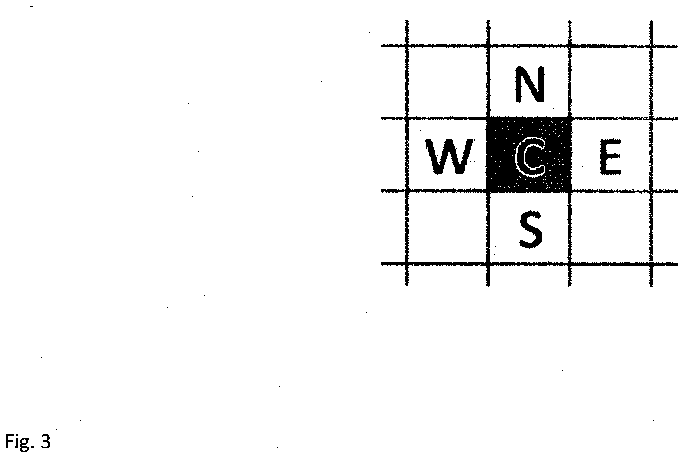

The convolutional 7-tap filter consists of a 5-tap plus sign shape spatial component, a nonlinear term and a bias term. The input to the spatial 5-tap component of the filter consists of a center (C) luma sample which is collocated with the chroma sample to be predicted and its above/north (N), below/south (S), left/west (W) and right/east (E) neighbors as is shown in Fig. 3 illustrating the spatial part of the convolutional filter. The nonlinear term P is represented as power of two of the center luma sample C and scaled to the sample value range of the content: $P = \left(C*C+midVal\right) ≫ bitDepth$ That is, for a 10-bit content the nonlinear term P is calculated as: $P = \left(C*C+512\right) ≫ 10$

The bias term B represents a scalar offset between the input and output (similarly to the offset term in CCLM) and is set to a middle chroma value (512 for 10-bit content).

The output of the filter is calculated as a convolution between the filter coefficients cᵢ and the input values and clipped to the range of valid chroma samples: $predChromaVal = {c}_{0} C + {c}_{1} N + {c}_{2} S + {c}_{3} E + {c}_{4} W + {c}_{5} P + {c}_{6} B$

### Calculation of filter coefficients

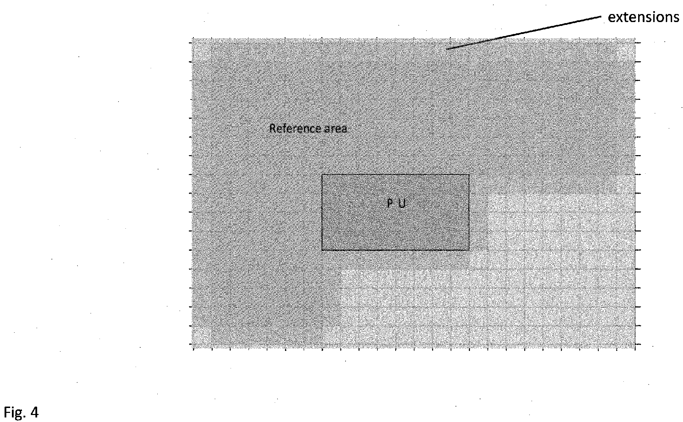

The filter coefficients cᵢ are calculated by minimizing the mean squared error (MSE) between predicted and reconstructed chroma samples in the reference area. Fig. 4 illustrates a reference area which consists of 2 or 6 lines of chroma samples above and left of the PU. Whether to use 6 lines or 2 lines of the neighboring samples to derive the CCCM model parameters in the single model CCCM is determined by a template cost. Similarly, for the multi-model CCCM mode, the two candidates use 6 lines of neighboring luma samples or luma samples collocated to the current chroma block to derive mean values which separate the samples into two groups. The cost is derived by applying the candidate cross component prediction (CCP) (either 2 or 6 lines) on a template, calculating the sum of absolute transformed differences (SATD) between CCP predicted samples and reconstructed samples in the template.

The reference area extends one PU in width to the right and one PU height below the PU boundaries. The area is adjusted to include only available samples. The extensions to the area shown in light grey are provided to support the "side samples" of the plus shaped spatial filter and are padded when in unavailable areas.

The MSE minimization is performed by calculating an autocorrelation matrix for the luma input and a cross-correlation vector between the luma input and the chroma output. The autocorrelation matrix is LDL decomposed and the final filter coefficients are calculated using a back-substitution. The process follows roughly the calculation of the Adaptive Loop Filter (ALF) filter coefficients in ECM, however the LDL decomposition was chosen instead of Cholesky decomposition to avoid using square root operations.

The autocorrelation matrix is calculated using the reconstructed values of the luma and chroma samples. These samples are full range (e.g. between 0 and 1023 for a 10-bit content) resulting in relatively large values in the autocorrelation matrix. This requires a high bit depth operation during the model parameters calculation. It is proposed to remove fixed offsets from the luma and chroma samples in each PU for each model. This is driving down the magnitudes of the values used in the model creation and allows reducing the precision needed for the fixed-point arithmetic. As a result, a 16-bit decimal precision is proposed to be used instead of the 22-bit precision of the original CCCM implementation.

Reference sample values just outside of the top-left corner of the PU are used as the offsets (offsetLuma, offsetCb and offsetCr) for simplicity. The samples values used in both model creation and final prediction (i.e., luma and chroma in the reference area, and luma in the current PU) are reduced by these fixed values, as follows:
C' = C - offsetLuma
N' = N - offsetLuma
S' = S - offsetLuma
E' = E - offsetLuma
W' = W - offsetLuma
P' = nonlinear(C') $B = midValue = 1 ≪ \left(bitDepth-1\right)$ and the chroma value is predicted using the following equation, where offsetChroma is equal to offsetCr and offsetCb for Cr and Cb components, respectively: $predChromaVal = {c}_{0} C ′ + {c}_{1} N ′ + {c}_{2} S ′ + {c}_{3} E ′ + {c}_{4} W ′ + {c}_{5} P ′ + {c}_{6} B + offsetChroma$

In order to avoid any additional sample level operations, the luma offset is removed during the luma reference sample interpolation. This can be done, for example, by substituting the rounding term used in the luma reference sample interpolation with an updated offset including both the rounding term and the offsetLuma. The chroma offset can be removed by deducting the chroma offset directly from the reference chroma samples. In an alternative way, the impact of the chroma offset can be removed from the cross-component vector giving identical result. In order to add the chroma offset back to the output of the convolutional prediction operation the chroma offset is added to the bias term of the convolutional model.

The process of CCCM model parameter calculation requires division operations. Division operations are not always considered implementation friendly. The division operation are replaced with multiplication (with a scale factor) and shift operation, where the scale factor and the number of shifts are calculated based on a denominator similar to the method used in the calculation of CCLM parameters.

### Gradient Linear Model

For a YUV 4:2:0 color format, a gradient linear model (GLM) method can be used to predict the chroma samples from luma sample gradients. Two modes are supported: a two-parameter GLM mode and a three-parameter GLM mode.

Compared with the CCLM method, instead of down-sampled luma values, the two-parameter GLM utilizes luma sample gradients to derive the linear model. Specifically, when the two-parameter GLM is applied, the input to the CCLM process, i.e., the down-sampled luma samples L, are replaced by luma sample gradients G. The other parts of the CCLM (e.g., parameter derivation, prediction sample linear transform) are kept unchanged. $C = α ⋅ G + β$

In the three-parameter GLM, a chroma sample can be predicted based on both the luma sample gradients and down-sampled luma values with different parameters. The model parameters of the three-parameter GLM are derived from 6 rows and columns adjacent samples by the LDL decomposition based MSE minimization method as used in the CCCM. $C = {α}_{0} ⋅ G + {α}_{1} ⋅ L + {α}_{2} ⋅ β$

For signaling, when the CCLM mode is enabled to the current coding unit (CU), one flag is signaled to indicate whether GLM is enabled for both Cb and Cr components; if the GLM is enabled, another flag is signaled to indicate which of the two GLM modes is, selected and one syntax element is further signaled to select one of 4 gradient filters for the gradient calculation.

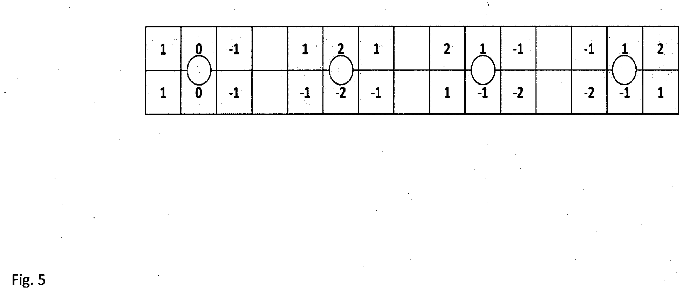

Four gradient filters are enabled for the GLM, as is shown in Fig. 5 illustrating four Sobel based gradient patterns for GLM.

### InterCCCM

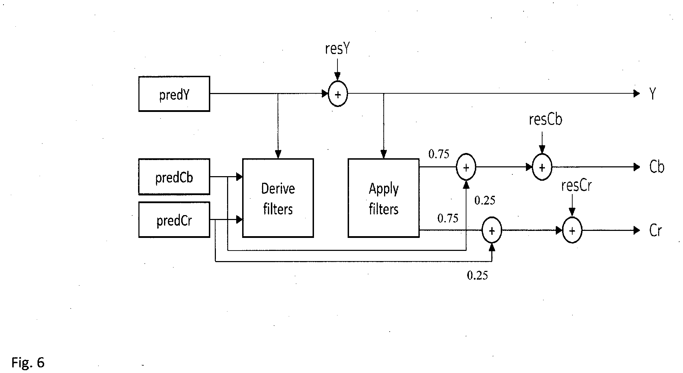

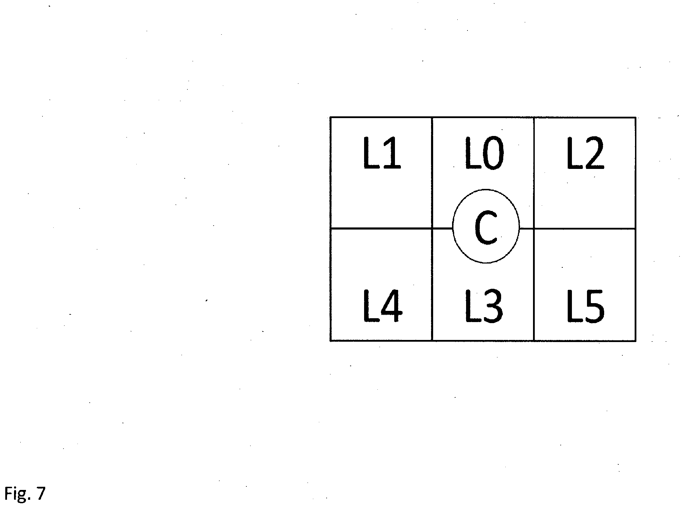

InterCCCM applies the CCCM method for predicting chroma samples from reconstructed luma samples when the CU uses inter prediction or intra block copy (IBC). Fig. 6 illustrates the decoder side of the method. The cross-component filters are derived using the prediction blocks of luma and chroma. The derived filters are applied to the reconstructed luma block and blended with the prediction blocks of chroma to produce the final chroma prediction blocks. In the blending process the filtered reconstructed luma blocks use blending weight of 0.75 and chroma prediction blocks use blending weight of 0.25. The 8-tap filter consist of 6 spatial luma samples, a nonlinear term, and a bias term. The spatial luma samples (L0,...,L5) are obtained from the luma grid by selecting the 6 luma samples closest to the chroma position C without down sampling as shown in Fig. 7 illustrating the luma samples L0,..,L5 in relation to the chroma sample C. The predicted chroma value is obtained as, $predChromaVal = c 0 L 0 + c 1 L 1 + c 2 L 2 + c 3 L 3 + c 4 L 4 + c 5 L 5 + c 6 nonlinear \left(\begin{matrix}\left(L0+L3+1\right) \\ ≫ 1\end{matrix}\right) + c 7 B ,$ where nonlinear is the CCCM's nonlinear operator and B is the bias. The filter coefficients are derived using an ECM's division-free Gaussian elimination method and the necessary offsets are applied to the samples prior to the filter derivation. The offsets for the division-free Gaussian elimination method are obtained using a four-point average of the luma and chroma prediction blocks, where the four points correspond to the top-left, top-right, bottom-left and bottom-right corners of the blocks. For filter coefficient derivation at most 256 chroma samples are used.

Usage of the mode is signaled with a CABAC coded Transform Unit (TU) level flag. One new CABAC context was included to support this. The InterCCCM flag is only signaled if the TU's luma Cbf is non-zero and the CU's predMode is either MODE_INTER or MODE_IBC.

The encoder performs an rate distortion (RD) decision in the transform selection loop for the chroma components when the luma Cbf is non-zero and the CU's predMode is either MODE_INTER or MODE_IBC.

### Disadvantages in prior art approaches

The above-described InterCCCM method adds dependencies to the (de)coding pipeline of a block mainly because of following reasons:
- Model derivation latency: the motion compensated samples of both luma and chroma components need to be ready before the *cross-component model derivation* process begins.
- The luma block needs to be reconstructed before the *cross-component prediction* process begins.
These dependencies impose a sequential processing of different aspects of the method, thus, making the process not friendly for parallel processing so that, consequently, additional latency is introduced in the (de)coding pipeline. Stated differently, in a state-of-the-art cross component prediction process, the required preprocessing of the luma and chroma prediction samples introduces undesired latency in the processing. The cross-component (CC) model derivation uses as an input the motion compensated luma and chroma samples that are obtained by interpolating the luma and chroma prediction samples. The CC prediction uses the reconstructed luma samples, which is obtained by combining the motion compensated luma samples and the luma residuals. Both, the interpolation and reconstruction introduce latencies in the CC process.

### Embodiments of the inventive approach

Embodiments of the present disclosure address the above shortcomings in the prior art by providing approaches reducing or avoiding the introduction of latencies experienced in prior art approaches.

The present disclosure is advantageous because, other than in conventional approaches, the present disclosure makes the inter cross-component prediction more suitable for parallel processing, thereby reducing or avoiding latencies.

In accordance with embodiments, the cross-component model derivation process may use, as input, only integer-pel motion compensated samples instead of fractional-pel motion compensated samples.

In accordance with other embodiments, the cross-component prediction process may use motion compensated luma samples instead of reconstructed luma samples.

In accordance with yet other embodiments, the cross-component prediction process may use integer-pel motion compensated luma samples.

Embodiments of the present disclosure suggest a CC process for obtaining chroma samples for a block which comprises one or more of the following:
(1) the CC filter derivation uses as an input only inter-pel compensated luma and chroma samples,
(2) in case of multi-predictions to be blended, the CC filter derivation uses as an input the non-blended uni-prediction luma and chroma samples (with fractional-pel or integer-pel precision),
(3) the CC prediction uses non-reconstructed luma samples,
(4) the CC filter derivation uses as an input only inter-pel motion compensated luma and chroma samples and the CC prediction uses non-reconstructed luma samples.

Embodiments of the present disclosure are described below with reference to the interCCCM method. However, the present disclosure is not limited to the interCCCM method. The present disclosure is applicable to any other inter cross-component prediction method, e.g., a cross-component linear model (CCLM) process or a gradient linear model (GLM) process.

Moreover, embodiments of the present disclosure are described below with reference to a motion vector-based prediction or motion compensation. However, the present disclosure is not limited to this. In accordance with other embodiments, the present disclosure is equally applicable when the inter cross-component prediction is built on top of a block vector-based prediction from a current picture such as intra block copy (IBC) or intra template matching (intraTMP) methods. The motion compensation may use different precisions in the prediction process. For example, motion vectors (in inter blocks) and block vectors (in IBC and intraTMP blocks) may use full-pel, half-pel or quarter-pel precisions.

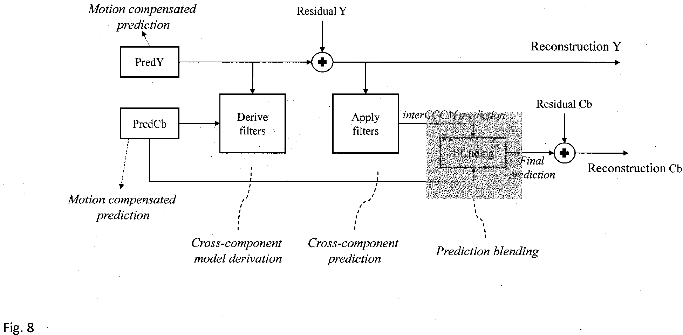

Fig. 8 illustrates a block diagram of a conventional inter convolutional cross-component model (interCCCM) process for a Cb chroma block component. Below are the definitions of the different modules of the conventional interCCCM process.
- *Cross-component model derivation:* the inputs to this process are inter predicted (also referred to as motion compensated) samples of the luma block (e.g., PredY in Fig. 8) and inter predicted chroma block (e.g., PredCb in Fig. 8). The output of the process is a set of filter coefficients that map luma samples to chroma samples.
- *Cross-component prediction:* the input to this process are reconstructed luma samples of the block (e.g., ReconstructionY in Fig. 8), and the output of the process are cross-component prediction samples for the chroma block (referred to as *interCCCM prediction* in Fig. 8).
- *Prediction blending:* this process blends the motion compensated chroma samples (e.g., PredCb in Fig. 8) and the interCCCM predicted samples in order to obtain the final prediction samples for a chroma block.

Embodiments of the present disclosure provide a method of predicting chroma samples of one or more blocks of a picture. The method includes inter cross-component predicting chroma samples of a block using fractional-pel precision, wherein:
- one or more cross-component filters are obtained using (1) one or more integer-pel motion compensated luma samples of the block and one or more integer-pel motion compensated chroma samples of the block, which are obtained from a fractional-pel vector for an inter prediction of the block, or (2) one or more or all of a plurality of luma samples to be blended for cross-component predicting one or more chroma samples, and/or one or more or all of a plurality of chroma samples to be blended for obtaining one or more final predicted chroma samples, wherein the luma and chroma samples comprise fractional-pel motion compensated luma and chroma samples, and/or integer-pel motion compensated luma and chroma samples, which are obtained from a fractional-pel vector for an inter prediction of the block, and/or
- one or more cross-component predicted chroma samples are obtained using one or more non-reconstructed luma samples, wherein the one or more non-reconstructed luma samples comprise one or more fractional-pel motion compensated luma samples of the block or one or more integer-pel motion compensated luma samples of the block, which are obtained from a fractional-pel vector for an inter prediction of the block.

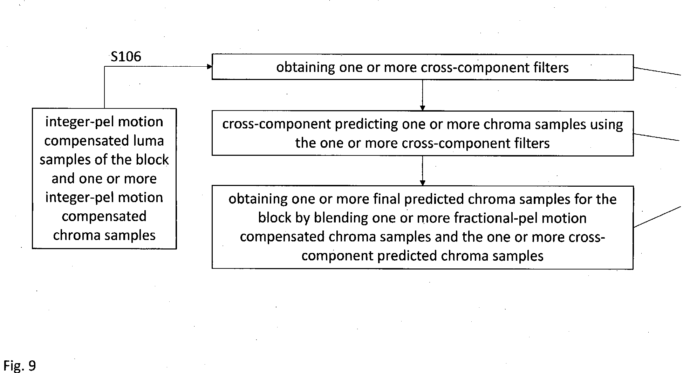

Fig. 9 illustrates a flow diagram of a method of predicting chroma samples of one or more blocks of a picture in accordance with embodiments of a first aspect of the present disclosure. The method includes inter cross-component predicting chroma samples of a block using in fractional-pel precision by:
S100 Obtaining one or more cross-component filters.
S102 Cross-component predicting one or more chroma samples using the one or more cross-component filters.
S104 Obtaining one or more final predicted chroma samples for the block by blending one or more fractional-pel motion compensated chroma samples and the one or more cross-component predicted chroma samples.
S106 Providing as inputs for obtaining the one or more cross-component filters: one or more integer-pel motion compensated luma samples of the block and one or more integer-pel motion compensated chroma samples of the block, which are obtained from a fractional-pel vector for an inter prediction of the block, e.g., from a block vector in fractional-pel precision including the fractional-pel vector.

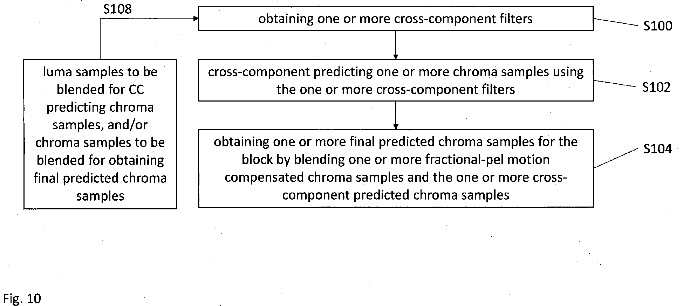

Fig. 10 illustrates a flow diagram of a method of predicting chroma samples of one or more blocks of a picture in accordance with embodiments of a second aspect of the present disclosure. The method includes inter cross-component predicting chroma samples of a block using fractional-pel precision by:
S100 Obtaining one or more cross-component filters.
S102 Cross-component predicting one or more chroma samples using the one or more cross-component filters.
S 104 Obtaining one or more final predicted chroma samples for the block by blending one or more motion compensated chroma samples and the one or more cross-component predicted chroma samples.
S108 Providing as inputs for obtaining the one or more cross-component filters: one or more or all of a plurality of luma samples to be blended for the cross-component predicting of the one or more chroma samples, and/or one or more or all of a plurality of chroma samples to be blended for the obtaining of the one or more final predicted chroma samples, wherein the luma and chroma samples comprise fractional-pel motion compensated luma and chroma samples, and/or integer-pel motion compensated luma and chroma samples, which are obtained from a fractional-pel vector for an inter prediction of the block, e.g., from a block vector in fractional-pel precision including the fractional-pel vector.

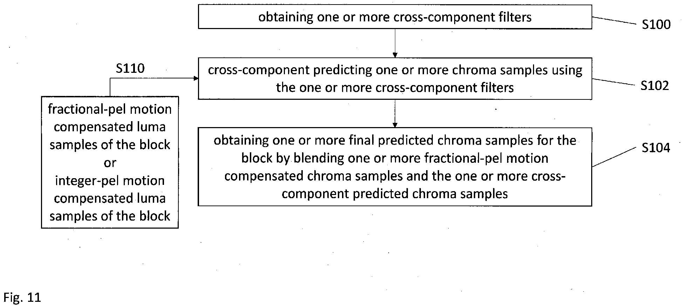

Fig. 11 illustrates a flow diagram of a method of predicting chroma samples of one or more blocks of a picture in accordance with embodiments of a third aspect of the present disclosure. The method includes inter cross-component predicting chroma samples of a block using in fractional-pel precision by:
S100 Obtaining one or more cross-component filters.
S102 Cross-component predicting one or more chroma samples using the one or more cross-component filters.
S104 Obtaining one or more final predicted chroma samples for the block by blending one or more motion compensated chroma samples and the one or more cross-component predicted chroma samples.
S110 Providing as inputs for obtaining the cross-component predicted chroma samples: one or more non-reconstructed luma samples, wherein the one or more non-reconstructed luma samples comprise one or more fractional-pel motion compensated luma samples of the block or one or more integer-pel motion compensated luma samples of the block, which are obtained from a fractional-pel vector for an inter prediction of the block, e.g., from a block vector in fractional-pel precision including the fractional-pel vector.

In accordance with the present disclosure, the one or more or all of the first aspect, the second aspect and the third aspect may be implemented. In accordance with embodiments, dependent on whether a latency associated with an interpolation of samples or with a blending of samples is to be avoided or reduced, the first aspect or the second aspect may be applied. The first aspect uses non-blended integer-pel motion compensated samples which allows the cross-component model derivation to start without additional latency by copying the samples from one or more reference pictures. The second aspect, when using fractional-pel motion compensated samples, allows the cross-component model derivation to start without additional latency by using as an input only the pre-blended prediction samples. In accordance with other embodiments, the second aspects may use integer-pel motion compensated samples so that in addition to avoiding or reducing the latency, which is associated with the blending/combining, also the latency, which is associated with an interpolation process, is avoided or reduced.

Thus, in accordance with embodiments of the present disclosure, the integer-pel prediction are used if the block, for which the chroma samples are to be predicted uses fractional-pel motion or block vectors. According to conventional approaches, the CC model derivation uses integer-pel motion compensated luma/chroma samples in case the block already uses integer-pel motion or block vectors. On the other hand, in accordance with the embodiments of the present disclosure, the integer-pel motion compensated predictions of luma/chroma may be used regardless of the motion vector precision that is used for the block prediction, i.e., if the block for which the chroma samples are to be predicted uses fractional-pel motion or block vectors, the integer-pel samples are obtained from the fractional-pel motion or block vector and used for the chroma sample prediction. When it is determined that the block or motion vector for the block is in fractional-pel precision, the prediction of the chroma samples for the block may switch to the embodiments described herein using integer-pel precision samples Embodiments of the present disclosure are now described in more detail.

### Reduced latency in cross-component model derivation

### Using integer-pel motion vector

When the motion vectors (MVs) of a block are in fractional-pel precision (e.g., half-pel, quarter-pel), there will be additional latency in the interCCCM method since both luma and chroma prediction samples require sample interpolation process in order to be available to be used in the *cross-component model derivation* process (see Fig. 8).

Embodiments of the first aspect of the present invention bypass the sample interpolation process of motion compensation by using integer-pel MVs for obtaining prediction data to be used in the *cross-component model derivation* process. By doing this, the luma and chroma samples may be copied from the reference pictures without the need for an additional sample interpolation phase. It is noted that in this embodiment the integer-pel motion compensated samples are used only as input to the *cross-component model derivation* process, while the actual chroma block prediction is still done using the fractional-pel MVs when the MVs are in fractional-pel precision.

By doing this, the *cross-component model derivation* process and the motion compensation of the luma and chroma blocks may be performed in parallel so that the latency in model derivation process is reduced.

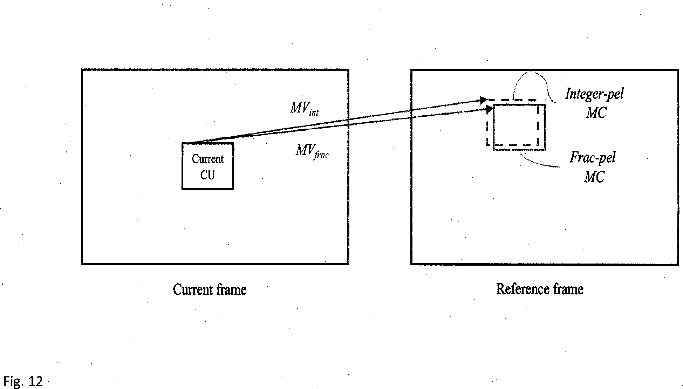

Fig. 12 illustrates an example of using two sets of MVs when the primary MV is in fractional-pel precision. In this case, a secondary MV that is only the integer-pel variant of the primary MV is used for identifying a secondary prediction samples to be used in *cross-component model derivation* process.

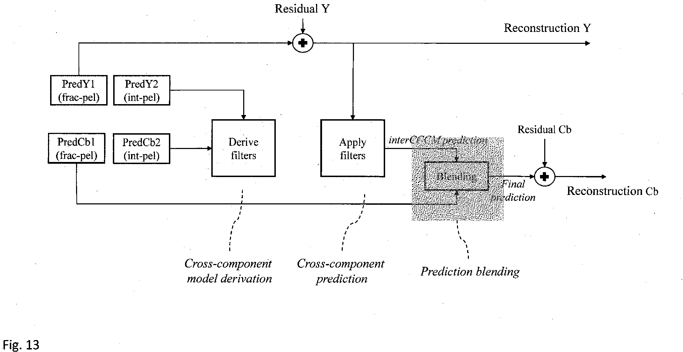

Fig. 13 illustrates the interCCCM process according to this embodiment. As shown, when compared to the conventional approach (see Fig. 8), two (2) sets of predictions are derived for the luma and chroma blocks when the MV is in fractional-pel precision. The primary predictions (PredY1 and PredCb1) are obtained by the fractional-pel MVs, and the secondary predictions (PredY2 and PredCb2) are obtained using the integer-pel MV variant of the primary MV. The secondary predictions are used as input to the *cross-component model derivation* process. As a result, the *cross-component model derivation* may start without any additional latency (due to the interpolation of the predicted luma and chroma samples) by copying the samples from one or more reference pictures.

### Model derivation in multi-prediction methods

The inter prediction of a block may be obtained by combining two or more motion compensated predictions such as in bi-predicted motion compensation methods that are typically used in video codecs. In such cases, in addition to the latency related to the sample interpolation (as described above), blending or combining the motion compensated predictions prior to applying them to the interCCCM process may add additional latency to the interCCCM process.

Embodiments of the second aspect of the present disclosure use prediction samples before blending the motion compensated predictions. It is noted that the pre-blended prediction samples are only used as input to the *cross-component model derivation* process. The actual inter prediction still uses the blended predictions to obtain block prediction.

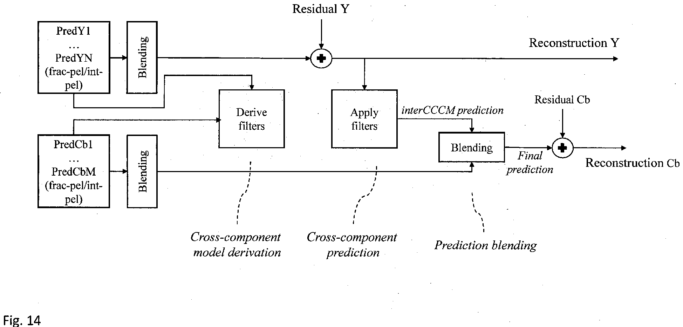

Fig. 14 illustrates the interCCCM process according to this embodiment. As shown, when compared to the conventional approach (see Fig. 8), N predictions are derived for the luma blocks (PredY1...PredYN) and M predictions are derived for the chroma blocks (PredCb1...PredCbM), with N, M being integers and being the same or different. The predictions may be obtained using MVs in fractional-pel precision or MVs in integer-pel precision. The blended predictions are used as input for the *cross-component prediction* and as input for the *prediction blending,* while one or more of the non-blended predictions PredY1...PredYN, PredCb1...PredCbM are used as input to the *cross-component model derivation* process. As a result, the *cross-component model derivation* may start without any additional latency due to the blending process.

In accordance with embodiments, when a block uses bi-prediction motion compensation, the inputs to the *cross-component model derivation* process may be two sets of uni-prediction luma blocks and two sets of uni-prediction chroma blocks.

In accordance with other embodiments, when a block uses bi-prediction, the inputs to the *cross-component model derivation* process may be only one of the two uni-prediction luma blocks and its corresponding uni-prediction chroma block. The choice of which uni-prediction block to use could be determined explicitly or implicitly.
- *Explicit approach:* The encoder may select a best performing uni-prediction luma and chroma block according to a rate-distortion optimization. A flag or index may be signaled in the bitstream (when an interCCCM usage flag is set to be true) to indicate which set of uni-prediction samples are used.
- *Implicit approach:* The decoder may determine which set of uni-prediction samples to use considering one or more different criteria associated with a temporal correlation of reference frames, an encoding quality of the reference frames or a prediction efficiency. In accordance with embodiments, different criteria consider one or more of the following:
   ∘ Based on temporal distance of the reference frames associated with each uni-prediction. For example, the set with a closer temporal distance to the current frame may be selected and used as prediction samples since the reference frames closer to the current picture may be considered more reliable.
   ∘ Based on one or more quality or quantization parameters (QPs) of the reference frames associated with each uni-prediction. For example, the set with higher quality or lower QPs may be selected and used as prediction samples since the higher quality reference frames may be considered more reliable.
   ∘ Based on a template cost calculation: For example, the template area (an MxN template of samples from the neighboring reconstructed area of the current block) may be compared to the same template size of the two reference blocks (in bi-prediction). The cost metric may be the sum of absolute differences (SAD), the sum of absolute transform differences (SATD) or any other cost metric. Based on the cost of each reference template compared to the current template, the codec may decide to use the one with lowest cost.
   ∘ A fixed or predetermined set may be used. For example, uni-prediction data from either reference picture list 0 or reference picture list 1.

In accordance with embodiments, the concept of using unblended motion compensated samples as input to the *cross-component model derivation* (second aspect) may be used with or without the above-described integer-pel motion compensation concept (first aspect).

In accordance with further embodiments, in the case of a multi-prediction (e.g., bi-prediction) with fractional-pel motion vectors, the *cross-component model derivation* may use blended predictions in integer-pel motion compensated precision, whereas the *cross-component prediction* process may use blended predictions with fractional-pel motion compensated precision.

### Reduced latency in cross-component prediction

### Using motion compensated samples in cross-component prediction

In accordance with embodiments of the third aspect of the present disclosure motion compensated luma samples ae used as an input to the *cross-component prediction* process instead of reconstructed luma samples.

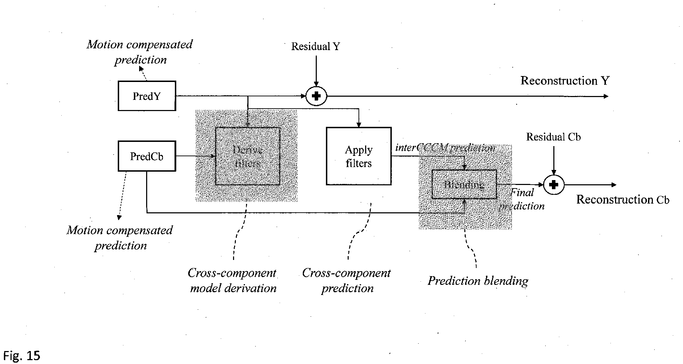

Fig. 15 illustrates a block diagram of an inter convolutional cross-component model (interCCCM) process in accordance with embodiments of the third aspect of the present disclosure. As is shown, the *cross-component prediction* process does not need to wait for the luma block to be reconstructed in order to execute the *cross-component prediction.* Thus, the latency in the (de)coding pipeline is reduced.

### Using fractional-pel motion compensated sampleslinteger-pel motion compensated samples in cross-component prediction

In accordance with embodiments of the present disclosure, when the inter prediction of the block uses fractional-pel precision for the motion compensation process, the *cross-component model derivation* approach (first aspect) may be used in which the inputs to the model derivation are samples from integer-pel motion compensation process, and, the *cross-component prediction* process may use fractional-pel motion compensated samples or integer-pel motion compensated luma samples of the block as input.

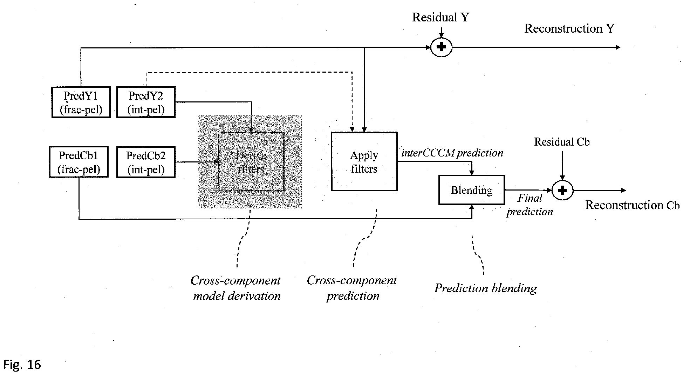

Fig. 16 illustrates a block diagram of an inter convolutional cross-component model (interCCCM) process implementing the first and third aspect of the present disclosure. As is shown, when the primary MV for motion compensation is in fractional-pel precision, two (2) sets of predictions are derived for luma and chroma blocks. The primary predictions (PredY1 and PredCb1) are obtained by the fractional-pel MVs, and the secondary predictions (PredY2 and PredCb2) are obtained using the integer-pel MV variant of the primary MVs.

The secondary predictions are used as input to the *cross-component model derivation* process (first aspect). Moreover, the *cross-component prediction* process uses the primary prediction obtained by fractional-pel motion compensation for luma as input instead of the reconstructed luma samples (third aspect). The benefits of such approach are:
- A reduced latency in the cross-component model derivation process when compared to conventional approaches.
- A reduced latency in the *cross-component prediction* process when compared to conventional approaches.
- A higher accuracy in the *cross-component prediction* compared to using integer-pel motion compensated samples in prediction process.

In accordance with further embodiments, the secondary predictions may be used as input to the *cross-component prediction* process, as is depicted schematically in Fig. 16 by the dashed arrow, i.e., instead of fractional-pel motion compensated luma samples (e.g., as in Fig. 16) or reconstructed luma samples (e.g., as in Fig. 13 and Fig. 14) of the block, one or more integer-pel motion compensated luma samples of the block may be used as an input for the *cross-component prediction* process.

In accordance with other embodiments of the present disclosure, when the inter prediction of the block uses fractional-pel precision for the motion compensation process, the *cross-component model derivation* approach may use as inputs to the model derivation samples from the fractional-pel motion compensation process, while the *cross-component prediction* process may use fractional-pel motion compensated samples or integer-pel motion compensated luma samples of the block as input.

### Using uni-prediction samples in cross-component model derivation and multi-prediction samples in cross-component prediction

In accordance with embodiments of the present disclosure, when a block is coded in multi-prediction methods such as bi-prediction using two motion vectors, the *cross-component model derivation* and *cross-component prediction* aspects may be configured as below:
- The *cross-component model derivation* process is implemented in accordance with the first or second aspect of the present disclosure, i.e., the input to the process may be one or more of integer-pel predicted luma and chroma blocks, or one or more non-blended fractional-pel or integer-pel predicted luma and chroma blocks.
- The *cross-component prediction* process is implemented according with the second aspect of the present disclosure, i.e., the input to the process may use the blended/combined prediction samples of the luma block.

Optionally, the *cross-component prediction* process is implemented according with the second and third aspects of the present disclosure, i.e., the input to the process may use the blended/combined prediction samples of the luma block prior to reconstructing the luma samples.

### Decoding Method

Embodiments of the present disclosure provide a method for decoding an encoded data stream, wherein decoding the encoded data stream includes predicting chroma samples in accordance with the above-described embodiments.

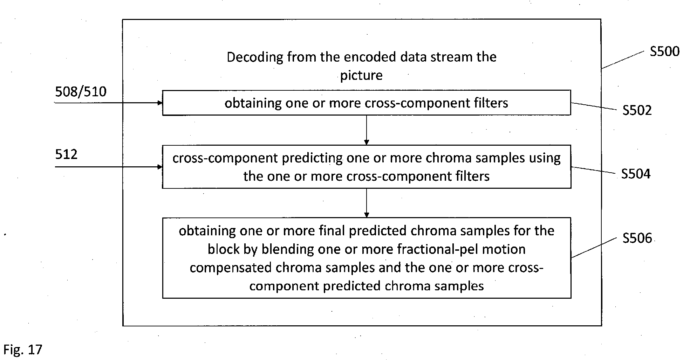

Fig. 17 illustrates a flow diagram of a method for decoding an encoded data stream, the encoded data stream including data representing a picture. The method includes the following:
S500: Decoding from the encoded data stream the picture, wherein decoding the picture comprises inter cross-component predicting chroma samples using fractional-pel precision, and wherein inter cross-component predicting the chroma samples includes:
S502 Obtaining one or more cross-component filters.
S504 Cross-component predicting one or more chroma samples using the one or more cross-component filters.
S506 Obtaining one or more final predicted chroma samples for the block by blending one or more motion compensated chroma samples and the one or more cross-component predicted chroma samples.
The method further comprises one or more or all of the following:
- Providing S508 as inputs for obtaining the one or more cross-component filters: one or more integer-pel motion compensated luma samples of the block and one or more integer-pel motion compensated chroma samples of the block, which are obtained from a fractional-pel vector for an inter prediction of the block, e.g., from a block vector in fractional-pel precision including the fractional-pel vector (see Fig. 9).
- Providing S510 as inputs for obtaining the one or more cross-component filters: one or more or all of a plurality of luma samples to be blended for the cross-component predicting of the one or more chroma samples, and/or one or more or all of a plurality of chroma samples to be blended for the obtaining of the one or more final predicted chroma samples, wherein the luma and chroma samples comprise fractional-pel motion compensated luma and chroma samples, and/or integer-pel motion compensated luma and chroma samples, which are obtained from a fractional-pel vector for an inter prediction of the block, e.g., from a block vector in fractional-pel precision including the fractional-pel vector (see Fig. 10).
- Providing S512 as inputs for obtaining the cross-component predicted chroma samples: one or more non-reconstructed luma samples, wherein the one or more non-reconstructed luma samples comprise one or more fractional-pel motion compensated luma samples of the block or one or more integer-pel motion compensated luma samples of the block, which are obtained from a fractional-pel vector for an inter prediction of the block, e.g., from a block vector in fractional-pel precision including the fractional-pel vector (see Fig. 11).

### Encoding Method

Embodiments of the present disclosure provide a method for encoding a picture into a data stream, wherein encoding the picture includes predicting chroma samples in accordance with the above-described embodiments.

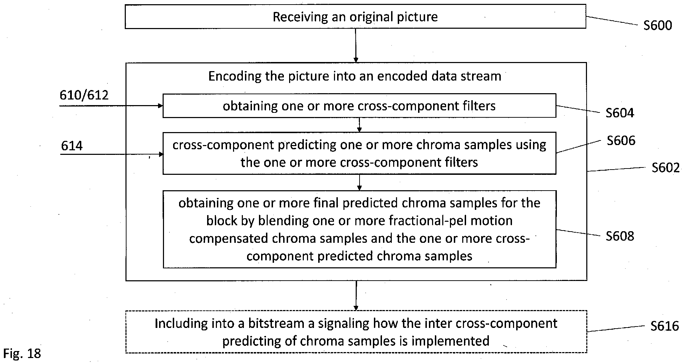

Fig. 18 illustrates a flow diagram of a method for encoding a picture into an encoded data stream. The encoded data stream includes data representing the picture and the method includes the following:
S600: Receiving an original picture.
S602: Encoding from the encoded data stream the picture, wherein encoding the picture comprises inter cross-component predicting chroma samples of a block using a block vector in fractional-pel precision, and wherein inter cross-component predicting the chroma samples includes:
   S604 Obtaining one or more cross-component filters.
   S606 Cross-component predicting one or more chroma samples using the one or more cross-component filters.
   S608 Obtaining one or more final predicted chroma samples for the block by blending one or more motion compensated chroma samples and the one or more cross-component predicted chroma samples.
The method further comprises one or more or all of the following:
- Providing S610 as inputs for obtaining the one or more cross-component filters: one or more integer-pel motion compensated luma samples of the block and one or more integer-pel motion compensated chroma samples of the block, which are obtained from a fractional-pel vector for an inter prediction of the block, e.g., the block vector in fractional-pel precision (see Fig. 9).
- Providing S612 as inputs for obtaining the one or more cross-component filters: one or more or all of a plurality of luma samples to be blended for the cross-component predicting of the one or more chroma samples, and/or one or more or all of a plurality of chroma samples to be blended for the obtaining of the one or more final predicted chroma samples, wherein the luma and chroma samples comprise fractional-pel motion compensated luma and chroma samples, and/or integer-pel motion compensated luma and chroma samples, which are obtained from a fractional-pel vector for an inter prediction of the block, e.g., the block vector in fractional-pel precision (see Fig. 10).
- Providing S614 as inputs for obtaining the cross-component predicted chroma samples: one or more non-reconstructed luma samples, wherein the one or more non-reconstructed luma samples comprise one or more fractional-pel motion compensated luma samples of the block or one or more integer-pel motion compensated luma samples of the block, which are obtained from a fractional-pel vector for an inter prediction of the block, e.g., the block vector in fractional-pel precision (see Fig. 11).

Optionally, the method comprises including S616 into the data stream or bitstream a signaling indicative how the inter cross-component predicting of chroma samples is implemented according to the present disclosure, e.g., whether the process receives one or more or all of the inputs 610, 612, 614.

### Further embodiments

So far, the inventive concept has been described with reference to aspects and embodiments concerning methods of processing one or more blocks of a picture, e.g., for decoding and/or for encoding. In accordance with further embodiments, the present disclosure also provides an apparatus of processing one or more blocks of a picture as encoders/decoders including such an apparatus.

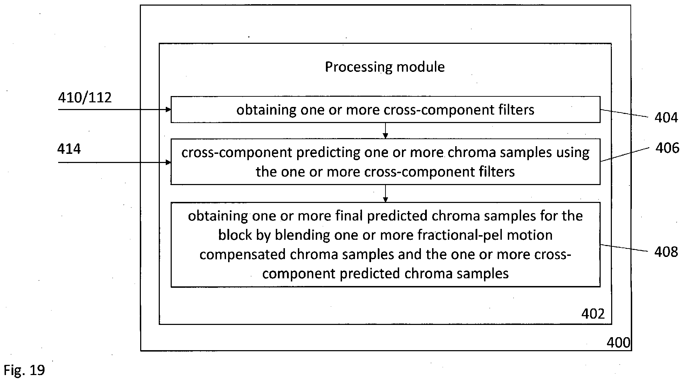

Fig. 19 illustrates a block diagram of an apparatus 400 in accordance with embodiments of the present disclosure. The apparatus 400 includes a processing module 402. The processing module is configured to inter cross-component predict chroma samples using fractional-pel precision. For inter cross-component predicting the chroma samples the processing module is configured to:
404 Obtain one or more cross-component filters.
406 Cross-component predict one or more chroma samples using the one or more cross-component filters.
408 Obtain one or more final predicted chroma samples for the block by blending one or more fractional-pel motion compensated chroma samples and the one or more cross-component predicted chroma samples.
The processing module is further configured to provide one or more or all of the following:
- as inputs 410 for obtaining the one or more cross-component filters: one or more integer-pel motion compensated luma samples of the block and one or more integer-pel motion compensated chroma samples of the block, which are obtained from a fractional-pel vector for an inter prediction of the block, e.g., from a block vector in fractional-pel precision including the fractional-pel vector (see Fig. 9).
- as inputs 412 for obtaining the one or more cross-component filters: one or more or all of a plurality of luma samples to be blended for the cross-component predicting of the one or more chroma samples, and/or one or more or all of a plurality of chroma samples to be blended for the obtaining of the one or more final predicted chroma samples, wherein the luma and chroma samples comprise fractional-pel motion compensated luma and chroma samples, and/or integer-pel motion compensated luma and chroma samples, which are obtained from a fractional-pel vector for an inter prediction of the block, e.g., from a block vector in fractional-pel precision including the fractional-pel vector (see Fig. 10).
- as inputs 414 for obtaining the cross-component predicted chroma samples: one or more non-reconstructed luma samples, wherein the one or more non-reconstructed luma samples comprise one or more fractional-pel motion compensated luma samples of the block or one or more integer-pel motion compensated luma samples of the block, which are obtained from a fractional-pel vector for an inter prediction of the block, e.g., from a block vector in fractional-pel precision including the fractional-pel vector (see Fig. 11).

Embodiments of the present disclosure provide an apparatus for predicting chroma samples of one or more blocks of a picture. The apparatus includes a processing module configured to inter cross-component predict chroma samples of a block using fractional-pel precision, wherein the processing module is configured to obtain
- one or more cross-component filters using (1) one or more integer-pel motion compensated luma samples of the block and one or more integer-pel motion compensated chroma samples of the block, which are obtained from a fractional-pel vector for an inter prediction of the block, or (2) one or more or all of a plurality of luma samples to be blended for cross-component predicting one or more chroma samples, and/or one or more or all of a plurality of chroma samples to be blended for obtaining one or more final predicted chroma samples, wherein the luma and chroma samples comprise fractional-pel motion compensated luma and chroma samples, and/or integer-pel motion compensated luma and chroma samples, which are obtained from a fractional-pel vector for an inter prediction of the block, and/or
- one or more cross-component predicted chroma samples using one or more non-reconstructed luma samples, wherein the one or more non-reconstructed luma samples comprise one or more fractional-pel motion compensated luma samples of the block or one or more integer-pel motion compensated luma samples of the block, which are obtained from a fractional-pel vector for an inter prediction of the block.

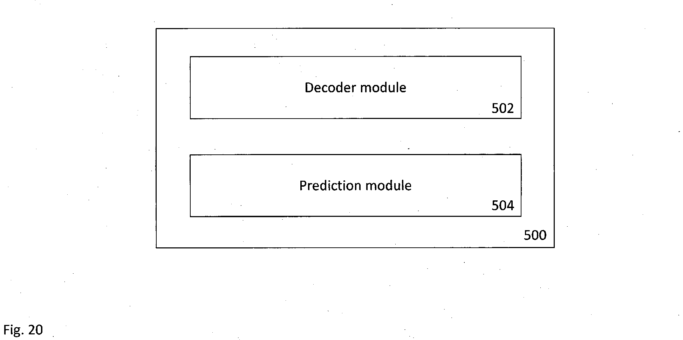

Fig. 20 illustrates a block diagram of a decoder for decoding an encoded data stream in accordance with embodiments of the present disclosure. The encoded data stream includes data representing a picture. The decoder 500 includes the following modules:
502: A decoder module configured to decode from the encoded data stream the picture.
504: A processing module, e.g., a prediction module 170 as depicted in Fig. 2. The processing module 502 is configured to operate in accordance with embodiments of the present disclosure. For example, the processing module 502 includes an apparatus as described with reference to Fig. 19.

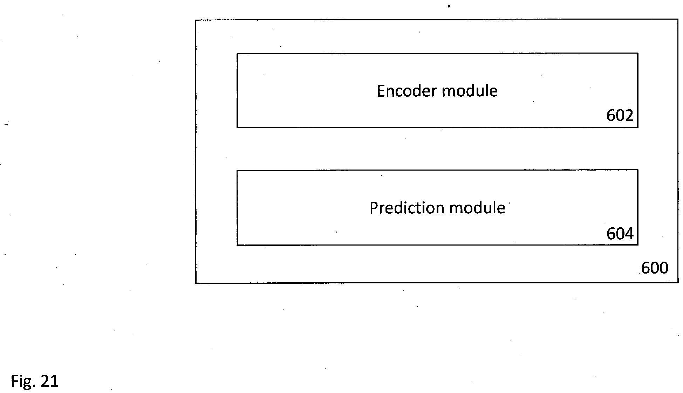

Fig. 21 illustrates a block diagram of an encoder for encoding a picture into an encoded data stream in accordance with embodiments of the present disclosure. The encoded data stream includes data representing the picture. The encoder 600 includes the following modules:
602: An encoder module configured to receive the original picture and to encode the picture into the encoded data stream.
604: A processing module, e.g., a prediction module 124 as depicted in Fig. 1. The processing module 602 is configured to operate in accordance with embodiments of the present disclosure. For example, the processing module 502 includes an apparatus as described with reference to Fig. 19.

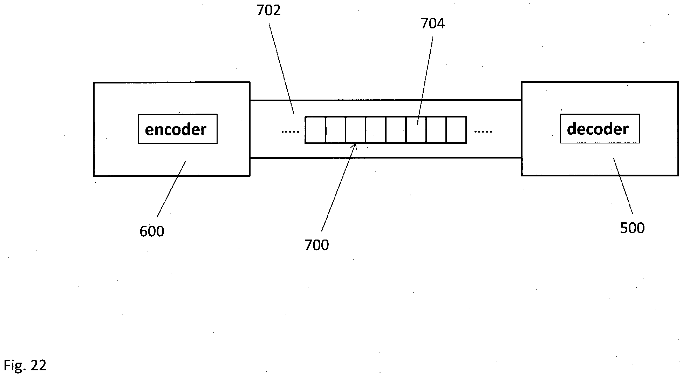

Fig. 22 illustrates a data stream 700 in accordance with embodiments of the present disclosure, which has encoded thereinto a picture and information data associated with the picture. For example, the data stream or bitstream 700 may be provided by an encoder 600 that performs the inventive method when encoding the picture into the data stream 700. The data stream 700 is transmitted to a decoder 500 via a wired or wireless transmission medium 702, like cable or a radio link, and the decoder 500 decodes from the data stream 700 the picture. The data stream 700 includes a signaling 704 indicative how the inter cross-component predicting of chroma samples is implemented according to the present disclosure, e.g., whether the process receives one or more or all of the inputs 610, 612, 614 (see Fig. 19).

Although some aspects of the disclosed concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

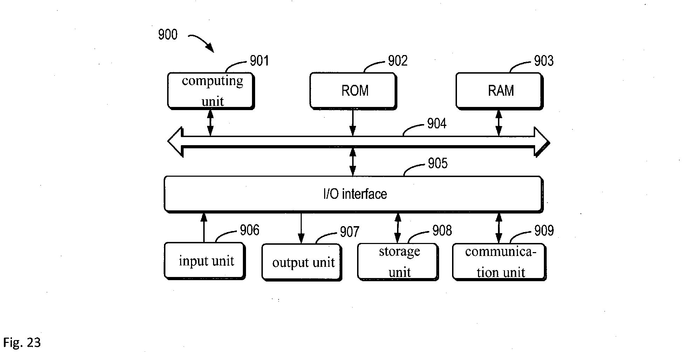

Fig. 23 is a block diagram illustrating an electronic device 900 according to embodiments of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital processor, a cellular phone, a smart phone, a wearable device, and other similar computing devices. The components shown herein, their connections and relationships, and their functions are described as examples only, and are not intended to limit implementations of the present disclosure described and/or claimed herein. The device 900 includes a computing unit 901 to perform various appropriate actions and processes according to computer program instructions stored in a read only memory (ROM) 902, or loaded from a storage unit 908 into a random access memory (RAM) 903. In the RAM 903, various programs and data for the operation of the storage device 900 may also be stored. The computing unit 901, the ROM 902, and the RAM 903 are connected to each other through a bus 904. An input/output (I/O) interface 905 is also connected to the bus 904.

Components in the device 900 are connected to the I/O interface 905, including: an input unit 906, such as a keyboard, a mouse; an output unit 907, such as various types of displays, speakers; a storage unit 908, such as a disk, an optical disk; and a communication unit 909, such as network cards, modems, wireless communication transceivers, and the like. The communication unit 909 allows the device 900 to exchange information/data with other devices through a computer network such as the Internet and/or various telecommunication networks. The computing unit 901 may be formed of various general-purpose and/or special-purpose processing components with processing and computing capabilities. Some examples of the computing unit 901 include, but are not limited to, a central processing unit (CPU), graphics processing unit (GPU), various specialized artificial intelligence (AI) computing chips, various computing units that run machine learning model algorithms, digital signal processor (DSP), and any suitable processor, controller, microcontroller, etc. The computing unit 901 performs various methods and processes described above, such as an image processing method. For example, in some embodiments, the image processing method may be implemented as computer software programs that are tangibly embodied on a machine-readable medium, such as the storage unit 908. In some embodiments, part or all of the computer program may be loaded and/or installed on the device 900 via the ROM 902 and/or the communication unit 909. When a computer program is loaded into the RAM 903 and executed by the computing unit 901, one or more steps of the image processing method described above may be performed. In some embodiments, the computing unit 901 may be configured to perform the image processing method in any other suitable manner (e.g., by means of firmware).

Various implementations of the systems and techniques described herein above may be implemented in digital electronic circuitry, integrated circuit systems, field programmable gate arrays (FPGA), application specific integrated circuits (ASIC), application specific standard products (ASSP), system-on-chip (SOC), complex programmable logic device (CPLD), computer hardware, firmware, software, and/or combinations thereof. These various embodiments may include being implemented in one or more computer programs executable and/or interpretable on a programmable system including at least one programmable processor, and the programmable processor may be a special-purpose or general-purpose programmable processor, and may receive data and instructions from a storage system, at least one input device and at least one output device, and may transmit data and instructions to the storage system, the at least one input device, and the at least one output device.

Program code for implementing the methods of the present disclosure may be written in any combination of one or more programming languages. These program codes may be provided to a processor or controller of a general computer, a dedicated computer, or other programmable data processing device, such that the program codes, when executed by the processor or controller, cause the functions and/or operations specified in the flow diagrams and/or block diagrams is performed. The program code may be executed entirely on the machine, partly on the machine, as a stand-alone software package partly on a machine and partly on a remote machine or entirely on a remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

To provide interaction with a user, the systems and techniques described herein may be implemented on a computer having a display device (e.g., a cathode ray tube (CRT) or liquid crystal display (LCD)) for displaying information for the user; and a keyboard and pointing device (e.g., a mouse or trackball) through which a user may provide an input to the computer. Other types of devices may also be used to provide interaction with the user, for example, the feedback provided to the user may be any form of sensory feedback (e.g., visual feedback, auditory feedback, or tactile feedback); and may be in any form (including acoustic input, voice input, or tactile input) to receive the input from the user.

The systems and techniques described herein may be implemented on a computing system that includes back-end components (e.g., as a data server), or a computing system that includes middleware components (e.g., an application server), or a computing system that includes front-end components (e.g., a user computer with a graphical user interface or web browser through which a user may interact with implementations of the systems and techniques described herein), or a computer system including such a backend components, middleware components, front-end components or any combination thereof. The components of the system may be interconnected by any form or medium of digital data communication (e.g., a communication network). Examples of the communication network includes: Local Area Networks (LAN), Wide Area Networks (WAN), the Internet and blockchain networks.

The computer system may include a client and a server. The Client and server are generally remote from each other and usually interact through a communication network. The relationship of the client and the server is generated by computer programs running on the respective computers and having a client-server relationship with each other. The server may be a cloud server, also known as a cloud computing server or a cloud host, which is a host product in the cloud computing service system, and solves the defects of difficult management and weak business expansion in traditional physical hosts and virtual private servers ("VPS" for short). The server may also be a server of a distributed system, or a server combined with a blockchain.

It is to be understood that the steps may be reordered, added or deleted by using the various forms of flows shown above. For example, the steps described in the present disclosure may be executed in parallel, sequentially, or in different orders, as long as the desired results of the technical solutions in the present disclosure may be achieved, and no limitation is imposed herein.

Further embodiments are now described:
A 1^{st} embodiment provides a method of predicting chroma samples of one or more blocks of a picture, the method comprising:
   inter cross-component predicting chroma samples of a block using fractional-pel precision,
   wherein one or more cross-component filters are obtained using:
      - one or more integer-pel motion compensated luma samples of the block and one or more integer-pel motion compensated chroma samples of the block, which are obtained from a fractional-pel vector for an inter prediction of the block, or
      - one or more or all of a plurality of luma samples to be blended for cross-component predicting one or more chroma samples, and/or one or more or all of a plurality of chroma samples to be blended for obtaining one or more final predicted chroma samples, wherein the luma and chroma samples comprise fractional-pel motion compensated luma and chroma samples, and/or integer-pel motion compensated luma and chroma samples, which are obtained from a fractional-pel vector for an inter prediction of the block, and/or
   wherein one or more cross-component predicted chroma samples are obtained using one or more non-reconstructed luma samples, wherein the one or more non-reconstructed luma samples comprise one or more fractional-pel motion compensated luma samples of the block or one or more integer-pel motion compensated luma samples of the block, which are obtained from a fractional-pel vector for an inter prediction of the block.
A 2^{nd} embodiment provides the method of the 1^{st} embodiment, wherein the integer-pel motion compensated luma and chroma samples are used only for obtaining the one or more cross-component filters, and wherein fractional-pel motion compensated luma samples are used for the cross-component predicting, and fractional-pel motion compensated chroma samples are used for the obtaining of the one or more final predicted chroma samples.
A 3^{rd} embodiment provides the method of the 1^{st} or 2^{nd} embodiment, wherein the integer-pel motion compensated luma and chroma samples are obtained from one or more reference pictures using a rounded or integer-pel variant part of a fractional-pel vector.
A 4^{th} embodiment provides the method of the 1^{st} or 2^{nd} embodiment, wherein the integer-pel motion compensated luma and chroma samples are obtained using a primary vector for inter prediction, which is in fractional-pel precision, a secondary vector, which is a rounded or integer-pel variant of the primary vector, and wherein the secondary vector is used for identifying the integer-pel motion compensated luma and chroma samples.
A 5^{th} embodiment provides the method of the 1^{st} or 2^{nd} embodiment, wherein luma and chroma samples are derived using a primary vector in fractional-pel precision, wherein the fractional-pel motion compensated luma and chroma samples are obtained by a fractional-pel variant of the primary vector, and wherein the integer-pel motion compensated luma and chroma samples are obtained using a rounded or integer-pel variant of the primary vector.
A 6^{th} embodiment provides the method of any one of the preceding embodiments, wherein
   - the luma and/or chroma samples to be blended are obtained using a multi-prediction process, like a bi-prediction process, and comprise the fractional-pel motion compensated luma and chroma samples and the integer-pel motion compensated luma and chroma samples,
   - a plurality or all of the integer-pel motion compensated luma samples are blended into a blended integer-pel motion compensated luma samples,
   - a plurality or all of the integer-pel motion compensated chroma samples of the block are blended into a blended integer-pel motion compensated chroma samples, and
   - the one or more cross-component filters are obtained using the blended integer-pel motion compensated luma and chroma samples.
A 7^{th} embodiment provides the method of the 6^{th} embodiment, wherein
   - a plurality or all of the fractional-pel motion compensated luma samples are blended into a blended fractional-pel motion compensated luma samples,
   - a plurality or all of the fractional-pel motion compensated chroma samples of the block are blended into a blended fractional-pel motion compensated chroma samples, and
   - the cross-component predicted chroma samples and the one or more final predicted chroma samples are obtained using the blended fractional-pel motion compensated luma and chroma samples.
An 8^{th} embodiment provides the method of any one of the preceding embodiments, wherein
   - the luma and/or chroma samples to be blended are obtained using a multi-prediction process, like a bi-prediction process,
   - before blending, one or more or all of the luma and chroma samples are used for obtaining the one or more cross-component filters, and
   - the blended luma and chroma samples are used for the cross-component predicting and for the obtaining of the one or more final predicted chroma samples.
A 9^{th} embodiment provides the method of the 8^{th} embodiment, wherein the multi-prediction process provides a plurality of uni-prediction luma blocks and a plurality of uni-prediction chroma blocks from respective reference frames which are used for obtaining the one or more cross-component filters.
A 10^{th} embodiment provides the method of the 9^{th} embodiment, wherein only one of the plurality of uni-prediction luma blocks and a corresponding uni-prediction chroma block are used for obtaining the one or more cross-component filters.
An 11^{th} embodiment provides the method of the 10^{th} embodiment, wherein the one uni-prediction luma block is selected using a rate-distortion process, e.g., a best performing uni-prediction luma block according to a rate-distortion optimization.
A 12^{th} embodiment provides the method of the 10^{th} or 11^{th} embodiment, wherein the one uni-prediction luma block is signaled in the data stream, like a bitstream, e.g., using a flag or an index.
A 13^{th} embodiment provides the method of the 10^{th} embodiment, wherein the one uni-prediction luma block is selected using one or more criteria associated with one or more of the following: a temporal correlation of reference frames, an encoding quality of the reference frames, a prediction efficiency.
A 14^{th} embodiment provides the method of the 13^{th} embodiment, wherein the one or more criteria comprise one or more of the following:
   - a temporal distance of reference frames associated with each uni-prediction luma block,
   - one or more quality or quantization parameters (QPs) of the reference frames associated with each uni-prediction luma block,
   - template cost.
A 15^{th} embodiment provides the method of the 10^{th} embodiment, wherein the one uni-prediction luma block is a fixed or predetermined uni-prediction luma block.
A 16^{th} embodiment provides the method of any one of the preceding embodiments, wherein the method comprises: reconstructing luma samples of the block using the fractional-pel or integer-pel motion compensated luma samples and luma residuals, and reconstructing chroma samples of the block using the final predicted chroma samples and chroma residuals.
A 17^{th} embodiment provides the method of the 16^{th} embodiment, wherein prior to reconstructing the luma samples, the fractional-pel or integer-pel motion compensated luma samples are applied to a cross-component predicting process.
An 18^{th} embodiment provides the method of any one of the preceding embodiments, wherein
   the one or more cross-component filters are obtained using the one or more integer-pel motion compensated luma samples and the one or more integer-pel motion compensated chroma samples, and
   the one or more cross-component predicted chroma samples are obtained using the one or more fractional-pel or integer-pel motion compensated luma samples of the block.
A 19^{th} embodiment provides the method of any one of the preceding embodiments, wherein the motion compensation uses a full-pel precision, or a half-pel precision or a quarter-pel precision.
A 20^{th} embodiment provides the method of any one of the preceding embodiments, wherein the one or more blocks comprise one or more inter-coded blocks, and the one or more vectors comprise one or more motion vectors.
A 21^{st} embodiment provides the method of any one of the 1^{st} to 19^{th} embodiments, wherein the one or more blocks comprise one or more non-inter-coded blocks, and the one or more vectors comprise one or more block vectors.
A 22^{nd} embodiment provides the method of the 21^{st} embodiment, wherein the one or more non-inter-coded blocks comprises one or more Intra block copy, IBC, coded blocks or one or more intra template matching prediction, intraTMP, coded blocks.
A 23^{rd} embodiment provides the method of any one of the preceding embodiments, wherein inter cross-component predicting comprises one of the following:
   - an inter convolutional cross-component model (interCCCM) process,
   - a cross-component linear model (CCLM) process,
   - a gradient linear model (GLM) process.
A 24^{th} embodiment provides the method of any one of the preceding embodiments, wherein inter cross-component predicting the chroma samples comprises:
   - obtaining the one or more cross-component filters,
   - cross-component predicting the one or more chroma samples using the one or more cross-component filters, and
   - obtaining the one or more final predicted chroma samples for the block by blending one or more fractional-pel motion compensated chroma samples and the one or more cross-component predicted chroma samples.
A 25^{th} embodiment provides a method for decoding an encoded data stream, the encoded data stream including data representing a picture, the method comprising:
   decoding from the encoded data stream the picture,
   wherein decoding the picture comprises inter cross-component predicting chroma samples according to any one of the preceding embodiments.
A 26^{th} embodiment provides a method for encoding a picture into an encoded data stream, the encoded data stream including data representing the picture, the method comprising:
   receiving an original picture, and
   encoding the picture into the encoded data stream,
   wherein encoding the picture comprises inter cross-component predicting chroma samples according to any one of the 1^{st} to 24^{th} embodiments.
A 27^{th} embodiment provides a non-transitory computer-readable storage medium comprising instructions which, when executed by a computer, cause the computer to carry out the method of any one of the preceding embodiments.
A 28^{th} embodiment provides an apparatus for predicting chroma samples of one or more blocks of a picture, the apparatus comprising:
   a processing module configured to inter cross-component predict chroma samples of a block using fractional-pel precision,
   wherein the processing module is configured to obtain one or more cross-component filters using:
      - one or more integer-pel motion compensated luma samples of the block and one or more integer-pel motion compensated chroma samples of the block, which are obtained from a fractional-pel vector for an inter prediction of the block, or
      - one or more or all of a plurality of luma samples to be blended for cross-component predicting one or more chroma samples, and/or one or more or all of a plurality of chroma samples to be blended for obtaining one or more final predicted chroma samples, wherein the luma and chroma samples comprise fractional-pel motion compensated luma and chroma samples, and/or integer-pel motion compensated luma and chroma samples, which are obtained from a fractional-pel vector for an inter prediction of the block, and/or
   wherein the processing module is configured to obtain one or more cross-component predicted chroma samples using one or more non-reconstructed luma samples, wherein the one or more non-reconstructed luma samples comprise one or more fractional-pel motion compensated luma samples of the block or one or more integer-pel motion compensated luma samples of the block, which are obtained from a fractional-pel vector for an inter prediction of the block.
A 29^{th} embodiment provides an apparatus for decoding an encoded data stream, the encoded data stream including data representing a picture, the apparatus comprising:
   a decoder module configured to decode from the encoded data stream the picture, and
   a prediction module, the prediction module including an apparatus according to the 28^{th} embodiment.
A 30^{th} embodiment provides an apparatus for encoding a picture into an encoded data stream, the encoded data stream including data representing the picture, the apparatus comprising:
   an encoder module configured to receive the original picture and to encode the picture into the encoded data stream, and
   a prediction module, the prediction module including an apparatus according to the 28^{th} embodiment.

The above-mentioned specific embodiments do not limit the scope of protection of the present disclosure. It is to be understood by those skilled in the art that various modifications, combinations, sub-combinations and replacements may be made depending on design requirements and other factors. Any modifications, equivalent replacements, and improvements made within the principles of the present disclosure or invention is to be included within the protection scope of the present disclosure or invention.

### References

[1] H.264: Advanced video coding for generic audiovisual services, https://www.itu.int/rec/T-REC-H.264-202108-P/en
[2] H.265: High efficiency video coding, https://www.itu.int/rec/T-REC-H.265-202108-P/en
[3] H.266: Versatile video coding, https://www.itu.int/rec/T-REC-H.266-202008-1/en
[4] AV1 Bitstream & Decoding Process Specification, http://aomedia.org/av1/specification/
[5] Algorithm description for Versatile Video Coding and Test Model 11 (VTM 11), https://jvet-experts.org/doc_end_user/current_document.php?id=10541
[6] Algorithm description of Enhanced Compression Model 12 (ECM 12), https://jvet-experts.org/doc_end user/current document.php?id=13915

## Claims

1. A method of predicting chroma samples of one or more blocks of a picture, the method comprising:
inter cross-component predicting chroma samples of a block using fractional-pel precision,
wherein one or more cross-component filters are obtained using:
- one or more integer-pel motion compensated luma samples of the block and one or more integer-pel motion compensated chroma samples of the block, which are obtained from a fractional-pel vector for an inter prediction of the block, or
- one or more or all of a plurality of luma samples to be blended for cross-component predicting one or more chroma samples, and/or one or more or all of a plurality of chroma samples to be blended for obtaining one or more final predicted chroma samples, wherein the luma and chroma samples comprise fractional-pel motion compensated luma and chroma samples, and/or integer-pel motion compensated luma and chroma samples, which are obtained from a fractional-pel vector for an inter prediction of the block, and/or
wherein one or more cross-component predicted chroma samples are obtained using one or more non-reconstructed luma samples, wherein the one or more non-reconstructed luma samples comprise one or more fractional-pel motion compensated luma samples of the block or one or more integer-pel motion compensated luma samples of the block, which are obtained from a fractional-pel vector for an inter prediction of the block.

2. The method of claim 1, wherein the integer-pel motion compensated luma and chroma samples are used only for obtaining the one or more cross-component filters, and wherein fractional-pel motion compensated luma samples are used for the cross-component predicting, and fractional-pel motion compensated chroma samples are used for the obtaining of the one or more final predicted chroma samples.

3. The method of claim 1 or 2, wherein the integer-pel motion compensated luma and chroma samples are obtained using a primary vector for inter prediction, which is in fractional-pel precision, a secondary vector, which is a rounded or integer-pel variant of the primary vector, and wherein the secondary vector is used for identifying the integer-pel motion compensated luma and chroma samples.

4. The method of any one of the preceding claims, wherein
- the luma and/or chroma samples to be blended are obtained using a multi-prediction process, like a bi-prediction process, and comprise the fractional-pel motion compensated luma and chroma samples and the integer-pel motion compensated luma and chroma samples,
- a plurality or all of the integer-pel motion compensated luma samples are blended into a blended integer-pel motion compensated luma samples,
- a plurality or all of the integer-pel motion compensated chroma samples of the block are blended into a blended integer-pel motion compensated chroma samples, and
- the one or more cross-component filters are obtained using the blended integer-pel motion compensated luma and chroma samples.

5. The method of claim 4, wherein
- a plurality or all of the fractional-pel motion compensated luma samples are blended into a blended fractional-pel motion compensated luma samples,
- a plurality or all of the fractional-pel motion compensated chroma samples of the block are blended into a blended fractional-pel motion compensated chroma samples, and
- the cross-component predicted chroma samples and the one or more final predicted chroma samples are obtained using the blended fractional-pel motion compensated luma and chroma samples.

6. The method of any one of the preceding claims, wherein
- the luma and/or chroma samples to be blended are obtained using a multi-prediction process, like a bi-prediction process,
- before blending, one or more or all of the luma and chroma samples are used for obtaining the one or more cross-component filters, and
- the blended luma and chroma samples are used for the cross-component predicting and for the obtaining of the one or more final predicted chroma samples.

7. The method of claim 6, wherein the multi-prediction process provides a plurality of uni-prediction luma blocks and a plurality of uni-prediction chroma blocks from respective reference frames which are used for obtaining the one or more cross-component filters.

8. The method of claim 7, wherein only one of the plurality of uni-prediction luma blocks and a corresponding uni-prediction chroma block are used for obtaining the one or more cross-component filters, and wherein the one uni-prediction luma block is selected using a rate-distortion process, e.g., a best performing uni-prediction luma block according to a rate-distortion optimization.

9. The method of claim 8, wherein the one uni-prediction luma block is signaled in the data stream, like a bitstream, e.g., using a flag or an index.

10. The method of claim 8, wherein
only one of the plurality of uni-prediction luma blocks and a corresponding uni-prediction chroma block are used for obtaining the one or more cross-component filters, and the one uni-prediction luma block is selected using one or more of the following criteria associated with a temporal correlation of reference frames, an encoding quality of the reference frames, or a prediction efficiency:
- a temporal distance of reference frames associated with each uni-prediction luma block,
- one or more quality or quantization parameters (QPs) of the reference frames associated with each uni-prediction luma block,
- template cost, or
the one uni-prediction luma block is a fixed or predetermined uni-prediction luma block.

11. The method of any one of the preceding claims, wherein
the method comprises: reconstructing luma samples of the block using the fractional-pel or integer-pel motion compensated luma samples and luma residuals, and reconstructing chroma samples of the block using the final predicted chroma samples and chroma residuals, and
prior to reconstructing the luma samples, the fractional-pel or integer-pel motion compensated luma samples are applied to a cross-component predicting process.

12. The method of any one of the preceding claims, wherein the one or more blocks comprise
one or more inter-coded blocks, and the one or more vectors comprise one or more motion vectors, or
one or more non-inter-coded blocks, and the one or more vectors comprise one or more block vectors, e.g., one or more Intra block copy, IBC, coded blocks or one or more intra template matching prediction, intraTMP, coded blocks.

13. The method of any one of the preceding claims, wherein inter cross-component predicting comprises one of the following:
- an inter convolutional cross-component model (interCCCM) process,
- a cross-component linear model (CCLM) process,
- a gradient linear model (GLM) process.

14. A non-transitory computer-readable storage medium comprising instructions which, when executed by a computer, cause the computer to carry out the method of any one of the preceding claims.

15. An apparatus for predicting chroma samples of one or more blocks of a picture, the apparatus comprising:
a processing module configured to inter cross-component predict chroma samples of a block using fractional-pel precision,
wherein the processing module is configured to obtain one or more cross-component filters using:
- one or more integer-pel motion compensated luma samples of the block and one or more integer-pel motion compensated chroma samples of the block, which are obtained from a fractional-pel vector for an inter prediction of the block, or
- one or more or all of a plurality of luma samples to be blended for cross-component predicting one or more chroma samples, and/or one or more or all of a plurality of chroma samples to be blended for obtaining one or more final predicted chroma samples, wherein the luma and chroma samples comprise fractional-pel motion compensated luma and chroma samples, and/or integer-pel motion compensated luma and chroma samples, which are obtained from a fractional-pel vector for an inter prediction of the block, and/or
wherein the processing module is configured to obtain one or more cross-component predicted chroma samples using one or more non-reconstructed luma samples, wherein the one or more non-reconstructed luma samples comprise one or more fractional-pel motion compensated luma samples of the block or one or more integer-pel motion compensated luma samples of the block, which are obtained from a fractional-pel vector for an inter prediction of the block.
